# EUROPEAN PATENT SPECIFICATION

(11) **EP 2 977 167 B1**
(45) Date of publication and mention of the grant of the patent: **29.08.2018**
(21) Application number: 15177241.5
(22) Date of filing: 17.07.2015
(51) Int. Cl.: B29C 45/17

(54) **INJECTION MOLDING MACHINE**
SPRITZGIESSMASCHINE
MACHINE DE MOULAGE À INJECTION

(30) Priority: 23.07.2014 JP 2014150189
(43) Date of publication of application: 27.01.2016
(73) Proprietor: SUMITOMO HEAVY INDUSTRIES, LTD., Tokyo 141-6025 (JP)
(72) Inventor: MORITA, Hiroshi, Chiba-shi, Chiba 263-0001 (JP); OGISO, Taro, Chiba-shi, Chiba 263-0001 (JP); HONDA, Katsuaki, Chiba-shi, Chiba 263-0001 (JP)
(74) Representative: Louis Pöhlau Lohrentz

(56) References cited:
- CN-A- 102 534 886
- JP-A- H11 226 999
- US-A1- 2009 278 411

## Description

### BACKGROUND OF THE INVENTION

### Field of the Invention

The present invention relates to an injection molding machine.

### Description of Related Art

An injection molding machine includes a mold clamping unit that closes, clamps, and opens a mold of a mold unit; an injection unit that fills the mold unit with a molding material; and the like. The mold clamping unit and the injection unit are installed on a frame, and the frame is installed on a floor with level adjusters interposed therebetween. The level adjusters adjust the height of the frame from the floor.

In Japanese Unexamined Patent Application Publication No. 11-226999 level adjusters are disclosed in which vibration-proof rubber members are loosely disposed in anchor brackets that are fixed to the floor surface.

In patent publication CN102534886A, a damping device capable of preventing twisting vibration in a textile spinning frame is disclosed.

In the patent application US 2009/0278411 A1 a reaction force cancel machine provided in a stage device including a surface plate and a plurality of stages is disclosed.

In the related art, the lateral shifting of the frame from the floor is generated due to the vibration of the mold clamping unit or the injection unit.

### SUMMARY OF THE INVENTION

The invention has been made in consideration of the above-mentioned problem, and a main object of the invention is to provide an injection molding machine that can suppress the lateral shifting of a frame from the floor.

To solve the problem, according to an aspect of the invention, there is provided an injection molding machine according to claim 1 and claim 2.

According to the aspect of the invention, there is provided an injection molding machine that can suppress the lateral shifting of a frame from the floor.

### BRIEF DESCRIPTION OF THE DRAWINGS

Fig. 1 is a view showing an injection molding machine according to an embodiment of the invention.
Fig. 2 is a view showing the state of a level adjuster of a first embodiment of the invention when adjustment starts.
Fig. 3 is a view showing the state of the level adjuster of the first embodiment of the invention when adjustment is completed.
Fig. 4 is a view showing the state of a level adjuster of a second embodiment of the invention when adjustment is completed.
Fig. 5 is a view showing the states of level adjusters of a third embodiment of the invention when adjustment is completed.
Fig. 6 is a view showing the state of a level adjuster of a fourth embodiment of the invention when adjustment is completed.
Fig. 7 is a view showing the state of a level adjuster of a fifth embodiment of the invention when adjustment is completed.

### DETAILED DESCRIPTION OF THE INVENTION

Embodiments of the invention will be described below with reference to the drawings. In the respective drawings, the same or corresponding components will be denoted by the same or corresponding components and the description thereof will be omitted.

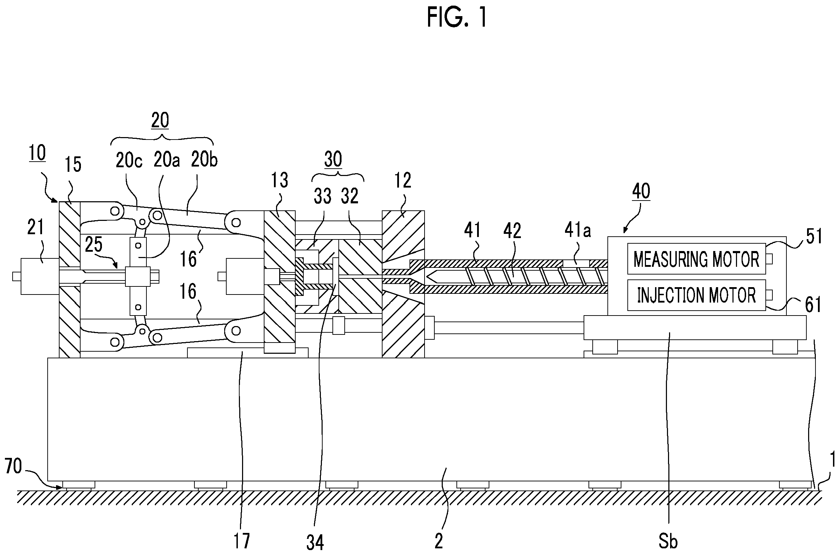

Fig. 1 is a view showing an injection molding machine according to an embodiment of the invention. The injection molding machine shown in Fig. 1 includes a frame 2, a mold clamping unit 10, an injection unit 40, and the like.

First, the mold clamping unit 10 will be described with reference to Fig. 1 and the like. The mold clamping unit 10 closes, clamps, and opens a mold of a mold unit 30. The mold clamping unit 10 includes a stationary platen 12, a movable platen 13, a rear platen 15, tie bars 16, a toggle mechanism 20, a mold clamping motor 21, and a motion conversion mechanism 25. In the description of the mold clamping unit 10, a side to which the movable platen 13 is moved at the time of the closing of the mold (a right side in Fig. 1) is referred to as a front side and a side to which the movable platen 13 is moved at the time of the opening of the mold (a left side in Fig. 1) is referred to as a rear side.

The stationary platen 12 is fixed to the frame 2. A stationary mold 32 is mounted on a surface of the stationary platen 12 facing the movable platen 13.

The movable platen 13 is adapted to be capable of moving along a guide (for example, a guide rail) 17 provided on the frame 2, and is adapted to be capable of being advanced to and retreated from the stationary platen 12. A movable mold 33 is mounted on a surface of the movable platen 13 facing the stationary platen 12.

When the movable platen 13 is advanced to and retreated from the stationary platen 12, the mold is closed, clamped, and opened. The mold unit 30 includes the stationary mold 32 and the movable mold 33.

The rear platen 15 is connected to the stationary platen 12 by a plurality of (for example, four) tie bars 16, and is placed on the frame 2 so as to be movable in a mold opening/closing direction. Meanwhile, the rear platen 15 may be movable along a guide provided on the frame 2. The guide for the rear platen 15 may be common to the guide 17 for the movable platen 13.

Meanwhile, in this embodiment, the stationary platen 12 has been fixed to the frame 2 and the rear platen 15 is movable relative to the frame 2 in the mold opening/closing direction. However, the rear platen 15 may be fixed to the frame 2 and the stationary platen 12 may be movable relative to the frame 2 in the mold opening/closing direction.

The tie bars 16 are parallel to the mold opening/closing direction and are stretched according to a mold clamping force. At least one of the tie bars 16 is provided with a mold clamping force detector. The mold clamping force detector may be a strain gauge type detector and detects a mold clamping force by detecting the strain of the tie bar.

Meanwhile, the mold clamping force detector is not limited to the strain gauge type detector, and may be a piezoelectric detector, a capacitance-type detector, a hydraulic detector, an electromagnetic detector, or the like. A position where the mold clamping force detector is mounted is also not limited to that of the tie bar 16.

The toggle mechanism 20 is disposed between the movable platen 13 and the rear platen 15. The toggle mechanism 20 includes a crosshead 20a, a plurality of links 20b and 20c, and the like. One link 20b is mounted on the movable platen 13 so as to freely oscillate, and the other link 20c is mounted on the rear platen 15 so as to freelyoscillate. These links 20b and 20c are connected to each other by a pin or the like so as to freely oscillate. When the crosshead 20a is advanced and retreated, the plurality of links 20b and 20c are bent and stretched. Accordingly, the movable platen 13 is advanced to and retreated from the rear platen 15.

The mold clamping motor 21 is mounted on the rear platen 15 and advances and retreats the movable platen 13 by advancing and retreating the crosshead 20a. A motion conversion mechanism 25, which converts the rotational motion of the mold clamping motor 21 into a linear motion and transmits the linear motion to the crosshead 20a, is provided between the mold clamping motor 21 and the crosshead 20a. The motion conversion mechanism 25 includes, for example, a ball screw and the like.

When the mold clamping motor 21 is driven to advance the movable platen 13, the mold is closed. The mold clamping force, which is obtained by multiplying a propulsive force generated from the mold clamping motor 21 by toggle magnification, is generated after the mold is completely closed. Accordingly, the mold is clamped by the mold clamping force. A cavity 34 is formed between the movable mold 33 and the stationary mold 32 when the mold is clamped. The cavity 34 is filled with liquid molding material. The molding material present in the cavity 34 is solidified, so that a molding product is formed. After that, when the mold clamping motor 21 is driven to retreat the movable platen 13, the mold is opened.

Since the injection unit 40 is installed on a slide base Sb that can be advanced to and retreated from the frame 2, the injection unit 40 is adapted to be capable of being advanced to and retreated from the mold unit 30. The injection unit 40 is touched to the mold unit 30 and fills the mold unit 30 with the molding material.

The injection unit 40 includes a cylinder 41, a screw 42, a plasticizing motor 51, and an injection motor 61. In the description of the injection unit 40, unlike the description of the mold clamping unit 10, a side to which the screw 42 is moved at the time of the filling of the mold unit with the molding material (a left side in Fig. 1) is referred to as a front side and a side to which the screw 42 is moved at the time of plasticizing (a right side in Fig. 1) is referred to as a rear side.

The cylinder 41 heats the molding material that is supplied from a supply port 41a. The supply port 41a is formed at a rear portion of the cylinder 41. A heating source such as a heater is provided on the outer periphery of the cylinder 41.

The screw 42 is disposed in the cylinder 41 so as to be capable of being rotated and being advanced and retreated.

The plasticizing motor 51 sends the molding material to the front side along a spiral groove of the screw 42 by rotating the screw 42. The molding material is gradually melted by heat applied from the cylinder 41 while being sent to the front side. As the liquid molding material is sent to the front side of the screw 42 and accumulated at the front portion of the cylinder 41, the screw 42 is retreated.

The injection motor 61 fills the cavity 34 of the mold unit 30 with the liquid molding material, which is accumulated on the front side of the screw 42, by advancing the screw 42. After that, the injection motor 61 pushes the screw 42 to the front side and applies pressure to the molding material that is present in the cavity 34. A shortage of the molding material can be supplemented. Amotion conversion mechanism, which converts the rotational motion of the injection motor 61 into the linear motion of the screw 42, is provided between the injection motor 61 and the screw 42. The motion conversion mechanism includes, for example, a ball screw and the like.

### [First embodiment]

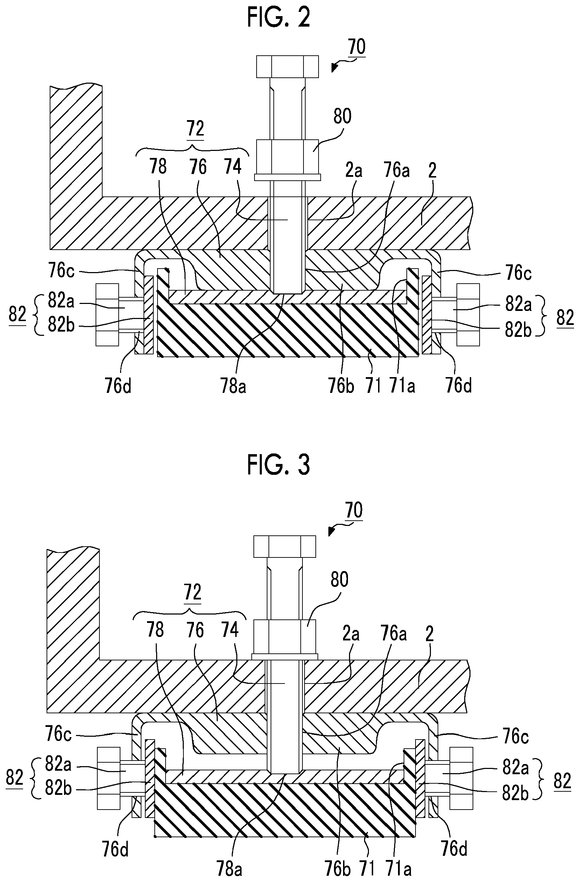

Fig. 2 is a view showing the state of a level adjuster of a first embodiment of the invention when adjustment starts. Fig. 3 is a view showing the state of the level adjuster of the first embodiment of the invention when adjustment is completed. In the description of the level adjuster, as in the description of the mold clamping unit 10, a side to which the movable platen 13 is moved at the time of the closing of the mold (a right side in Fig. 1) is referred to as a front side and a side to which the movable platen 13 is moved at the time of the opening of the mold (a left side in Fig. 1) is referred to as a rear side. This is the same in other embodiments.

Level adjusters 70 are disposed between the frame 2 and a floor 1, and adjust the height of the frame 2 from the floor 1. The frame 2 is supported by the plurality of level adjusters 70. The level adjuster 70 includes a base 71, a support tool 72, a fixing tool 80, and pressing tools 82.

The base 71 is installed on the floor 1. The base 71 is made of, for example, rubber or the like, absorbs vibration by being elastically deformed, and suppresses the transmission of vibration between the frame 2 and the floor 1. The shape of the base 71 may be varied, and may be, for example, any one of a circular shape, an oval shape, a rectangular shape, a square shape, a triangular shape, and a polygonal shape, which has five or more sides, as seen in a top view. A recess 71a is formed on the upper surface of the base 71, and the support tool 72 is inserted into the recess 71a.

The support tool 72 supports the frame 2 so that the frame 2 can be moved up and down relative to the base 71. As shown in, for example, Figs. 2 and 3, the support tool 72 includes a threaded shaft 74, a movable body 76, and a receiving body 78.

The threaded shaft 74 is parallel to a vertical direction. The threaded shaft 74 is threadedly engaged with a threaded hole 76a of the movable body 76 and a threaded hole of the fixing tool 80. The frame 2 is disposed between the movable body 76 and the fixing tool 80. An insertion hole 2a is formed in the frame 2, and the threaded shaft 74 is inserted into the insertion hole 2a.

The movable body 76 includes a threaded hole 76a that is threadedly engaged with the threaded shaft 74. The movable body 76 is not rotated together with the threaded shaft 74, and is moved up and down with the rotation of the threaded shaft 74. Meanwhile, the threaded shaft 74 and the threaded hole 76a may be threadedly engaged with each other with rolling elements, such as balls, interposed therebetween for the reduction of sliding resistance.

The movable body 76 includes a placement portion 76b on which the frame 2 is placed and mounting portions 76c on which the pressing tools 82 are mounted. The threaded hole 76a, which is threadedly engaged with the threaded shaft 74, is formed in the placement portion 76b.

The receiving body 78 supports the threaded shaft 74 so that the threaded shaft 74 is rotatable. An insertion hole 78a is formed on the upper surface of the receiving body 78, and one end of the threaded shaft 74 is inserted into the insertion hole 78a. The lateral shifting of the threaded shaft 74 relative to the receiving body 78 can be suppressed.

The receiving body 78 is disposed between the threaded shaft 74 and the base 71, and prevents the wear of the base 71 that is caused by the rotation of the threaded shaft 74. The receiving body 78 is supported by the base 71, and is placed in, for example, the recess 71a of the base 71.

The lower surface of the receiving body 78 is a horizontal flat surface in Figs. 2 and 3, but may be an inclined surface, a conical surface that is convex downward or upward, or the like. Likewise, the bottom of the recess 71a of the base 71 is a horizontal flat surface in Figs. 2 and 3, but may be an inclined surface, a conical surface that is convex downward or upward, or the like.

The shape of the receiving body 78 may be varied, and may be, for example, any one of a circular shape, an oval shape, a rectangular shape, a square shape, a triangular shape, and a polygonal shape, which has five or more sides, as seen in a top view.

The fixing tool 80 includes a threaded hole that is threadedly engaged with the threaded shaft 74. Since it is possible to adjust a gap between the fixing tool 80 and the movable body 76 by rotating the fixing tool 80, it is possible to clamp the frame 2 from both sides in the vertical direction with the fixing tool 80 and the movable body 76.

The pressing tools 82 are mounted on the mounting portions 76c of the movable body 76. The pressing tools 82 are not rotated together with the threaded shaft 74, and are moved up and down with the rotation of the threaded shaft 74.

The pressing tools 82 press the base 71 and the support tool 72 in a horizontal direction. Since the rattling of the base 71 and the support tool 72 in the horizontal direction can be reduced, the lateral shifting between the base 71 and the support tool 72 can be suppressed. Accordingly, the lateral shifting between the floor 1 and the frame 2 can be suppressed.

As shown in, for example, Figs. 2 and 3, each of the pressing tools 82 includes a threaded shaft portion 82a and a contact part 82b. The threaded shaft portions 82a are parallel to the horizontal direction and are threadedly engaged with threaded holes 76d of the movable body 76. The contact part 82b is fixed to one end of the threaded shaft portion 82a.

The threaded shaft portions 82a are screwed in, so that the contact parts 82b are pressed against the side surfaces of the base 71. As a result, the recess 71a of the base 71 is constricted and the side surfaces of the recess 71a are pressed against the side surfaces of the receiving body 78 in the horizontal direction. Since the rattling of the side surfaces of the recess 71a and the side surfaces of the receiving body 78 can be reduced, the lateral shifting can be suppressed.

The pressing tools 82 may press not only a portion of the base 71 corresponding to the recess 71a but also a portion of the base 71 present below the recess 71a. The lateral shifting, which is caused by the elastic deformation of the base 71, can be suppressed.

A plurality of pressing tools 82 may be provided around the base 71 and, for example, one pressing tool 82 may be disposed on each of the front and rear sides of the base 71. The vibration of the mold clamping unit 10 or the injection unit 40 is often strongest in a front-rear direction among horizontal directions. The reason for this is that the movable platen 13 and the screw 42 are driven in the front-rear direction. Accordingly, if the pressing tools 82 are disposed on the front and rear sides of the base 71, the lateral shifting in the front-rear direction can be effectively suppressed.

Meanwhile, one pressing tool 82 is provided around the base 71 and is disposed on, for example, the front or rear side of the base 71. Since there is a case in which the strength of the vibration of the mold clamping unit 10 or the injection unit 40 transmitted to the front side is different from that transmitted to the rear side, there is a case in which a force pushing the support tool 72 to the front side is different from a force pushing the support tool 72 to the rear side. When the force pushing the support tool 72 to the front side is large, the pressing tool 82 may be disposed on the front side of the base 71. Further, when the force pushing the support tool 72 to the rear side is large, the pressing tool 82 may be disposed on the rear side of the base 71.

Further, the pressing tools 82 maybe disposed on the lateral sides of the base 71 (sides of the base 71 present on a direction perpendicular to the front-rear direction and the vertical direction) . The positions and the number of the pressing tools 82 are not particularly limited.

Next, the method of using the level adjuster 70 having the above-mentioned structure will be described. When adjustment starts, the fixing tool 80 and the pressing tools 82 are loosened as shown in Fig. 2. In this state, the movable body 76 is moved up and down by the rotation of the threaded shaft 74, so that the height of the frame 2 is adjusted. After the adjustment, the fixing tool 80 and the pressing tools 82 are tightened as shown in Fig. 3. It is possible to clamp the frame 2 from both sides in the vertical direction with the fixing tool 80 and the movable body 76. Further, it is possible to press the base 71 and the support tool 72 in the horizontal direction with the pressing tools 82.

As described above, the level adjuster 70 of this embodiment presses the base 71 and the support tool 72 in the horizontal direction with the pressing tools 82. Since the rattling of the base 71 and the support tool 72 in the horizontal direction can be reduced, the lateral shifting between the base 71 and the support tool 72 can be suppressed. Accordingly, the lateral shifting between the floor 1 and the frame 2 can be suppressed.

### [Second embodiment]

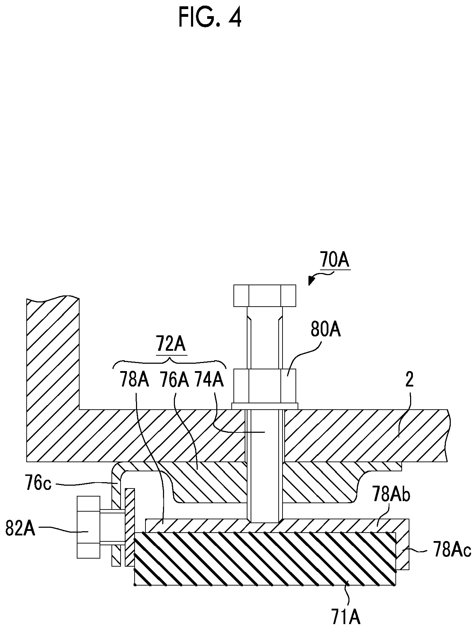

Fig. 4 is a view showing the state of a level adjuster of a second embodiment of the invention when adjustment is completed. The level adjuster 70A shown in Fig. 4 is used instead of the level adjuster 70 shown in Figs. 2 and 3.

Like the level adjuster 70 of the first embodiment, the level adjuster 70A includes a base 71A, a support tool 72A, a fixing tool 80A, and a pressing tool 82A. The support tool 72A includes a threaded shaft 74A, a movable body 76A, and a receiving body 78A. Differences between the first and second embodiments will be mainly described below.

The receiving body 78A includes a horizontal portion 78Ab that is placed on the upper surface of the base 71A and a vertical portion 78Ac that comes into contact with the side surface of the base 71A. The vertical portion 78Ac is provided on the side of the base 71A opposite to the pressing tool 82A.

The pressing tool 82A is mounted on the movable body 76A. The pressing tool 82A is not rotated together with the threaded shaft 74A, and is moved up and down with the rotation of the threaded shaft 74A.

The pressing tool 82A presses the base 71A and the support tool 72A in a horizontal direction. Since the rattling of the base 71A and the support tool 72A in the horizontal direction can be reduced, the lateral shifting between the base 71A and the support tool 72A can be suppressed. Accordingly, the lateral shifting between the floor 1 and the frame 2 can be suppressed.

The pressing tool 82A horizontally presses the base 71A against the vertical portion 78Ac of the receiving body 78A. The base 71A is interposed between the pressing tool 82A and the receiving body 78A in the horizontal direction.

Meanwhile, the base 71A is interposed between the pressing tool 82A and the receiving body 78A in the horizontal direction in this embodiment, but the base 71A may be interposed between the pressing tool 82A and the movable body 76A in the horizontal direction.

One pressing tool 82A is provided around the base 71A and may be disposed on, for example, the front or rear side of the base 71A. The vibration of the mold clamping unit 10 or the injection unit 40 is often strongest in a front-rear direction among horizontal directions. Accordingly, if the pressing tool 82A is disposed on the front or rear side of the base 71A, the lateral shifting in the front-rear direction can be effectively suppressed.

Meanwhile, the pressing tool 82A may be disposed on the lateral side of the base 71A. The position and the number of the pressing tool 82A are not particularly limited.

### [Third embodiment]

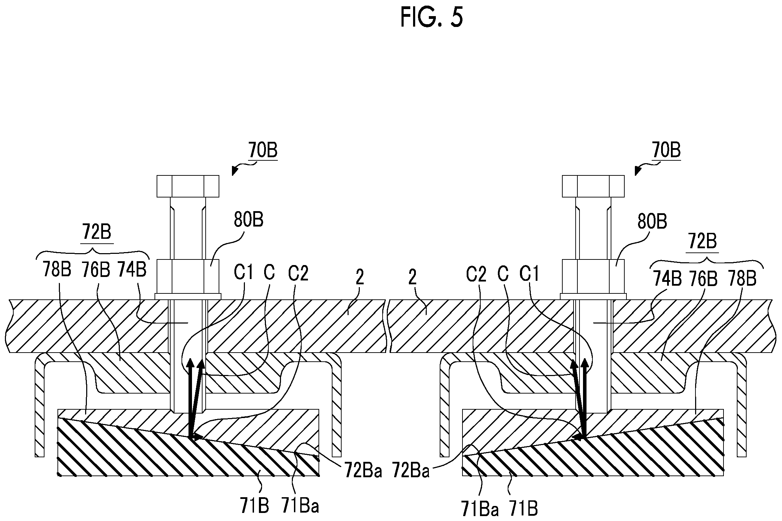

Fig. 5 is a view showing the states of level adjusters of a third embodiment of the invention when adjustment is completed. Each of the level adjusters 70B shown in Fig. 5 is used instead of the level adjuster 70 shown in Figs. 2 and 3.

Like the level adjuster 70 of the first embodiment, the level adjuster 70B includes a base 71B, a support tool 72B, and a fixing tool 80B. The support tool 72B includes a threaded shaft 74B, a movable body 76B, and a receiving body 78B.

The level adjuster 70B does not include a pressing tool unlike the level adjuster 70 of the first embodiment. Differences between the first and third embodiments will be mainly described below.

A contact surface 72Ba of the support tool 72B, which comes into contact with the base 71B, is an inclined surface that is inclined with respect to the vertical direction. Likewise, a contact surface 71Ba of the base 71B, which comes into contact with the support tool 72B, is an inclined surface that is inclined with respect to the vertical direction. These contact surfaces 71Ba and 72Ba are flat surfaces in Fig. 5, but may be curved surfaces. These contact surfaces 71Ba and 72Ba may include flat surfaces and curved surfaces.

An external force E (not shown) is applied to the support tool 72B from the frame 2, and a reactive force C is applied to the support tool 72B from the base 71B. The external force E applied from the frame 2 is caused by gravity applied to the frame 2 or a unit mounted on the frame 2. The reactive force C applied from the base 71B is generated against the external force E, and is applied in a direction perpendicular to a contact surface of the receiving body 78B coming into contact with the base 71B. The reactive force C includes a vertical component C1 and a horizontal component C2. The horizontal component C2 is applied outward from a center line of the external force E (a center line of the threaded shaft 74B).

The support tool 72B and the base 71B include contact surfaces 72Ba and 71Ba that cause the horizontal component C2 of the reactive force C to be generated. The direction of the contact surface 71Ba of one base 71B coming into contact with the support tool 72B and the direction of the contact surface 71Ba of the other base 71B coming into contact with the support tool 72B may be different from each other in the horizontal direction and, for example, may be opposite to each other in the horizontal direction. In other words, the direction of a horizontal component C2 of one level adjuster 70B and the direction of a horizontal component C2 of the other level adjuster 70B may be different from each other and, for example, may be opposite to each other. The base 71B and the support tool 72B of the other level adjuster 70B are pressed in the horizontal direction by the horizontal component C2 of one level adjuster 70B. Since the rattling of the base 71B and the support tool 72B in the horizontal direction can be reduced, the lateral shifting between the base 71B and the support tool 72B can be suppressed. Accordingly, the lateral shifting between the floor 1 and the frame 2 can be suppressed.

The contact surface 71Ba of the base 71B coming into contact with the support tool 72B may rise forward or rise rearward. The vibration of the mold clamping unit 10 or the injection unit 40 is often strongest in a front-rear direction among horizontal directions. Accordingly, if the contact surface 71Ba of the base 71B coming into contact with the support tool 72B rises forward or rises rearward, the lateral shifting in the front-rear direction can be effectively suppressed.

Since there is a case in which the strength of the vibration of the mold clamping unit 10 or the injection unit 40 transmitted to the front side is different from that transmitted to the rear side, there is a case in which a force pushing the support tool 72B to the front side is different from a force pushing the support tool 72B to the rear side. When the force pushing the support tool 72B to the front side is large, among the plurality of the level adjusters 70B, the number of the level adjusters 70B of which the contact surfaces 71Ba of the bases 71B coming into contact with the support tools 72B rise forward may be larger than the number of the level adjusters 70B of which the contact surfaces 71Ba rise rearward. Meanwhile, when the force pushing the support tool 72B to the rear side is large, among the plurality of level adjusters 70B, the number of the level adjusters 70B of which the contact surfaces 71Ba rise rearward may be larger than the number of the level adjusters 70B of which the contact surfaces 71Ba rise forward. On the other hand, when the force pushing the support tool 72B to the rear side is substantially equal to the force pushing the support tool 72B to the front side, among the plurality of level adjusters 70B, the number of the level adjusters 70B of which the contact surfaces 71Ba rise forward may be equal to the number of the level adjusters 70B of which the contact surfaces 71Ba rise rearward.

The horizontal component C2 of the reactive force C applied to the support tool 72B from the base 71B may be parallel to the front-rear direction. The lateral shifting in the front-rear direction can be effectively suppressed. Meanwhile, the horizontal component C2 of the reactive force C applied to the support tool 72B from the base 71B may not be parallel to the front-rear direction, and may be parallel to, for example, a line connecting the level adjuster 70B to the center of the frame 2 as seen in a top view.

### [Fourth embodiment]

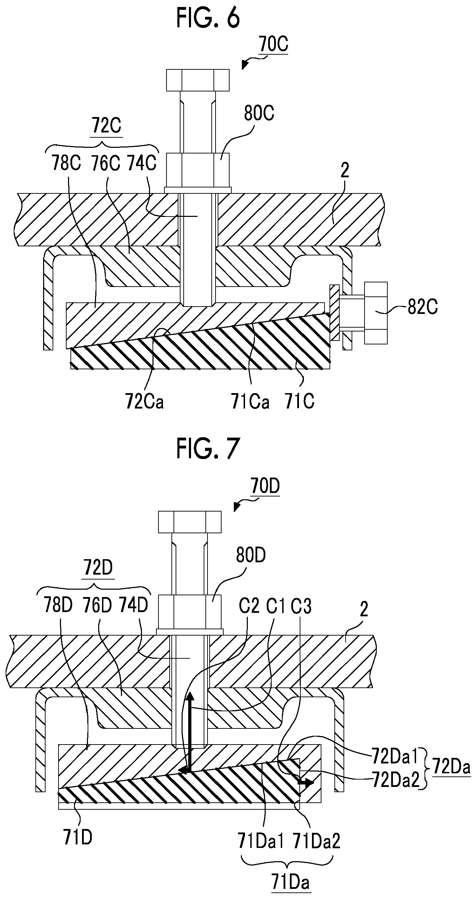

Fig. 6 is a view showing the state of a level adjuster of a fourth embodiment of the invention when adjustment is completed. The level adjuster 70C shown in Fig. 6 is a modification of the level adjuster 70A shown in Fig. 4.

The level adjuster 70C includes a base 71C, a support tool 72C, a fixing tool 80C, and a pressing tool 82C. The support tool 72C includes a threaded shaft 74C, a movable body 76C, and a receiving body 78C.

An external force is applied to the support tool 72C from the frame 2, and a reactive force is applied to the support tool 72C from the base 71C. The support tool 72C and the base 71C include contact surfaces 72Ca and 71Ca that cause a horizontal component of a reactive force to be generated.

The pressing tool 82C presses the base 71C and the support tool 72C in a horizontal direction by using the horizontal component of the reactive force. Since the rattling of the base 71C and the support tool 72C in the horizontal direction can be reduced, the lateral shifting between the base 71C and the support tool 72C can be suppressed. Accordingly, the lateral shifting between the floor 1 and the frame 2 can be suppressed.

The contact surface 71Ca of the base 71C coming into contact with the support tool 72C may rise forward or rise rearward. The vibration of the mold clamping unit 10 or the injection unit 40 is often strongest in a front-rear direction among horizontal directions. Accordingly, if the contact surface 71Ca of the base 71C coming into contact with the support tool 72C rises forward or rises rearward, the lateral shifting in the front-rear direction can be effectively suppressed.

Since there is a case in which the strength of the vibration of the mold clamping unit 10 or the injection unit 40 transmitted to the front side is different from that transmitted to the rear side, there is a case in which a force pushing the support tool 72C to the front side is different from a force pushing the support tool 72C to the rear side. When the force pushing the support tool 72C to the front side is large, among the plurality of the level adjusters 70C, the number of the level adjusters 70C of which the contact surfaces 71Ca of the bases 71C coming into contact with the support tools 72C rise forward may be larger than the number of the level adjusters 70C of which the contact surfaces 71Ca rise rearward. In this case, the level adjusters 70C of which the contact surfaces 71Ca rise rearward may not be provided. Meanwhile, when the force pushing the support tool 72C to the rear side is large, among the plurality of level adjusters 70C, the number of the level adjusters 70C of which the contact surfaces 71Ca rise rearward may be larger than the number of the level adjusters 70C of which the contact surfaces 71Ca rise forward. In this case, the level adjusters 70C of which the contact surfaces 71Ca rise forward may not be provided. On the other hand, when the force pushing the support tool 72C to the rear side is substantially equal to the force pushing the support tool 72C to the front side, among the plurality of level adjusters 70C, the number of the level adjusters 70C of which the contact surfaces 71Ca rise forward may be equal to the number of the level adjusters 70C of which the contact surfaces 71Ca rise rearward.

A horizontal component of a reactive force applied to the support tool 72C from the base 71C may be parallel to the front-rear direction. The lateral shifting in the front-rear direction can be effectively suppressed. Meanwhile, the horizontal component of the reactive force applied to the support tool 72C from the base 71C may not be parallel to the front-rear direction, and may be parallel to, for example, a line connecting the level adjuster 70C to the center of the frame 2 as seen in a top view.

### [Fifth embodiment]

Fig. 7 is a view showing the state of a level adjuster of a fifth embodiment of the invention when adjustment is completed. The level adjuster 70D shown in Fig. 7 is a modification of the level adjuster 70A shown in Fig. 4, and includes inclined surfaces 71Da1 and 72Da1 shown in Fig. 7 instead of the pressing tool 82A shown in Fig. 4.

The level adjuster 70D includes a base 71D, a support tool 72D, and a fixing tool 80D. The support tool 72D includes a threaded shaft 74D, a movable body 76D, and a receiving body 78D.

An external force is applied to the support tool 72D from the frame 2, and a reactive force is applied to the support tool 72D from the base 71D. The support tool 72D and the base 71D include contact surfaces 72Da and 71Da that cause a horizontal component of a reactive force to be generated.

The contact surface 72Da of the support tool 72D, which comes into contact with the base 71D, includes a vertical surface 72Da2, which is perpendicular to the horizontal direction, in addition to an inclined surface 72Da1 that is inclined with respect to the vertical direction. A reactive force is applied to the contact surface 72Da. The reactive force includes a horizontal component C3 in addition to a vertical component C1 and a horizontal component C2. The horizontal components C2 and C3 are applied outward from a center line of an external force that is applied to the support tool 72D from the frame 2 (a center line of the threaded shaft 74D). The horizontal components C2 and C3 have the same magnitude and are applied in opposite directions. The base 71D and the support tool 72D are pressed in the horizontal direction by the horizontal components C2 and C3. Since the rattling of the base 71D and the support tool 72D in the horizontal direction can be reduced, the lateral shifting between the base 71D and the support tool 72D can be suppressed. Accordingly, the lateral shifting between the floor 1 and the frame 2 can be suppressed.

Likewise, the contact surface 71Da of the base 71D, which comes into contact with the support tool 72D, includes a vertical surface 71Da2, which is perpendicular to the horizontal direction, in addition to an inclined surface 71Da1 that is inclined with respect to the vertical direction.

The inclined surface 71Da1 of the base 71D and the inclined surface 72Da1 of the support tool 72D may rise forward or rise rearward. The vibration of the mold clamping unit 10 or the injection unit 40 is often strongest in a front-rear direction among horizontal directions. The lateral shifting in the front-rear direction can be effectively suppressed.

The vertical surface 71Da2 of the base 71D and the inclined surface 72Da1 of the support tool 72D may face the front side or face the rear side. The vibration of the mold clamping unit 10 or the injection unit 40 is often strongest in a front-rear direction among horizontal directions. The lateral shifting in the front-rear direction can be effectively suppressed.

Since there is a case in which the strength of the vibration of the mold clamping unit 10 or the injection unit 40 transmitted to the front side is different from that transmitted to the rear side, there is a case in which a force pushing the support tool 72D to the front side is different from a force pushing the support tool 72D to the rear side. When the force pushing the support tool 72D to the front side is large, among the plurality of the level adjusters 70D, the number of the level adjusters 70D of which the vertical surfaces 71Da2 of the bases 71D face the rear side may be larger than the number of the level adjusters 70D of which the vertical surfaces 71Da2 face the front side. In this case, the level adjusters 70D of which the vertical surfaces 71Da2 face the front side may not be provided. On the other hand, when the force pushing the support tool 72D to the rear side is large, among the plurality of level adjusters 70D, the number of the level adjusters 70D of which the vertical surfaces 71Da2 face the front side may be larger than the number of the level adjusters 70D of which the vertical surfaces 71Da2 face the rear side. In this case, the level adjusters 70D of which the vertical surfaces 71Da2 face the rear side may not be provided. Meanwhile, when the force pushing the support tool 72D to the rear side is substantially equal to the force pushing the support tool 72D to the front side, among the plurality of level adjusters 70D, the number of the level adjusters 70D of which the vertical surfaces 71Da2 face the front side may be equal to the number of the level adjusters 70D of which the vertical surfaces 71Da2 face the rear side.

Meanwhile, the contact surface 71Da of the base 71D, which comes into contact with the support tool 72D, has included the inclined surface 71Da1 and the vertical surface 71Da2 in this embodiment, but may include a plurality of inclined surfaces having different orientations. The contact surface 72Da of the support tool 72D, which comes into contact with the base 71D, is similar.

The horizontal components C2 and C3 of the reactive force C applied to the support tool 72D from the base 71D may be parallel to the front-rear direction. The lateral shifting in the front-rear direction can be effectively suppressed. Meanwhile, the horizontal components C2 and C3 of the reactive force C applied to the support tool 72D from the base 71D may not be parallel to the front-rear direction, and may be parallel to, for example, a line connecting the level adjuster 70D to the center of the frame 2 as seen in a top view.

Further, the level adjuster 70D does not include a pressing tool in this embodiment, but may further include a pressing tool like the level adjuster 70A shown in Fig. 4.

The embodiments and the like of the injection molding machine have been described above. However, the invention is not limited to the above-mentioned embodiments and the like, and can be modified and improved in various ways without departing from the scope of the invention described in claims.

For example, the mold clamping unit 10 of the embodiment has included the mold clamping motor 21 as a driving source, but may include a hydraulic cylinder instead of the mold clamping motor 21. Further, the mold clamping unit 10 may include a linear motor for opening and closing a mold and may include an electromagnet for clamping a mold.

Furthermore, the mold clamping unit 10 of the embodiment is a horizontal mold clamping unit of which a mold opening/closing direction is a horizontal direction, but may be a vertical mold clamping unit of which a mold opening/closing direction is a vertical direction. Moreover, the injection unit 40 of the embodiment is a horizontal injection unit of which a cylinder is parallel to a horizontal direction, but may be a vertical injection unit of which a cylinder is parallel to a vertical direction.

Further, the support tool of the embodiment includes the threaded shaft, the movable body, and the receiving body, but the structure of the support tool may be varied. For example, the threaded hole, which is threadedly engaged with the threaded shaft, is not formed in the movable body and may be formed in the frame. In this case, the movable body may not be provided.

## Claims

1. An injection molding machine comprising:
a level adjuster (70, 70A, 70B, 70C, 70D) that adjusts a height of a frame (2) from a floor (1),
wherein the level adjuster (70, 70A, 70B, 70C, 70D) includes a base (71) that is installed on the floor (1) and a support tool (72, 72A, 72B, 72C, 72D) which supports the frame (2) so that the frame (2) is movable up and down relative to the base (71),
**characterized in that** the level adjuster (70, 70A, 70B, 70C, 70D) includes a pressing tool (82, 82A, 82C) that presses the base (71) and the support tool (72, 72A, 72B, 72C, 72D) in a horizontal direction,
the support tool (72, 72A, 72B, 72C, 72D) includes a threaded shaft (74, 74A, 74B, 74C, 74D), a movable body (76, 76A, 76B, 76C, 76D) in which a threaded hole (76a) threadedly engaged with the threaded shaft (74, 74A, 74B, 74C, 74D) is formed, and a receiving body (78, 78A, 78B, 78C, 78D) which rotatably supports the threaded shaft (74, 74A, 74B, 74C, 74D), and
the receiving body (78, 78A, 78B, 78C, 78D) is placed on the base (71), the frame (2) is mounted on the movable body (76, 76A, 76B, 76C, 76D), and the movable body (76, 76A, 76B, 76C, 76D) is moved up and down by the rotation of the threaded shaft (74, 74A, 74B, 74C, 74D),
the pressing tool (82, 82A, 82C) includes a threaded shaft portion (82a) threadedly engaged with the threaded holes (76d) of the movable body (76, 76A, 76B, 76C, 76D) and a contact part (82b) fixed to one end of the threaded shaft portion (82a), and
the threaded shaft portion (82a) is screwed in, so that the contact part (82b) is pressed against a side surface of the base (71).

2. An injection molding machine comprising:
a level adjuster (70, 70A, 70B, 70C, 70D) that adjusts a height of a frame (2) from a floor (1),
wherein the level adjuster (70, 70A, 70B, 70C, 70D) includes a base (71) that is installed on the floor (1) and a support tool (72, 72A, 72B, 72C, 72D) which supports the frame (2) so that the frame (2) is movable up and down relative to the base (71),
**characterized in that** the level adjuster (70, 70A, 70B, 70C, 70D) includes a pressing tool (82, 82A, 82C) that presses the base (71) and the support tool (72, 72A, 72B, 72C, 72D) in a horizontal direction,
an external force is applied to the support tool (72, 72A, 72B, 72C, 72D) from the frame (2) and a reactive force (C) is applied to the support tool (72, 72A, 72B, 72C, 72D) from the base (71),
the support tool (72, 72A, 72B, 72C, 72D) and the base (71) include contact surfaces (71Ba and 72Ba, 71Ca and 72Ca, 71Da and 72Da) that cause a horizontal component of the reactive force (C) to be generated, and are pressed in the horizontal direction by the horizontal component,
the support tool (72, 72A, 72B, 72C, 72D) includes a threaded shaft (74, 74A, 74B, 74C, 74D), a movable body (76, 76A, 76B, 76C, 76D) in which a threaded hole threadedly engaged with the threaded shaft (74, 74A, 74B, 74C, 74D) is formed, and a receiving body (78, 78A, 78B, 78C, 78D) which rotatably supports the threaded shaft (74, 74A, 74B, 74C, 74D), and
the receiving body (78, 78A, 78B, 78C, 78D) is placed on the base (71), the frame (2) is mounted on the movable body (76, 76A, 76B, 76C, 76D), and the movable body (76, 76A, 76B, 76C, 76D) is moved up and down by the rotation of the threaded shaft (74, 74A, 74B, 74C, 74D).

3. The injection molding machine according to claim 1 or 2, further comprising:
a plurality of the level adjusters (70, 70A, 70B, 70C, 70D),
wherein the direction of the horizontal component of one of the level adjusters (70, 70A, 70B, 70C, 70D) and the direction of the horizontal component of the other one of the level adjusters (70, 70A, 70B, 70C, 70D) are different from each other.

## Patentansprüche

1. Spritzgussmaschine, die Folgendes enthält:
eine Niveaueinstelleinrichtung (70, 70A, 70B, 70C, 70D), die eine Höhe eines Rahmens (2) über einem Boden (1) einstellt,
wobei die Niveaueinstelleinrichtung (70, 70A, 70B, 70C, 70D) eine Grundplatte (71), die an dem Boden (1) installiert ist, und ein Tragwerkzeug (72, 72A, 72B, 72C, 72D), das den Rahmen (2) trägt, derart, dass der Rahmen (2) relativ zu der Grundplatte (71) aufwärts und abwärts beweglich ist, enthält,
**dadurch gekennzeichnet, dass** die Niveaueinstelleinrichtung (70, 70A, 70B, 70C, 70D) ein Presswerkzeug (82, 82A, 82C) enthält, das die Grundplatte (71) und das Tragwerkzeug (72, 72A, 72B, 72C, 72D) in einer horizontalen Richtung presst,
das Tragwerkzeug (72, 72A, 72B, 72C, 72D) eine Gewindewelle (74, 74A, 74B, 74C, 74D), einen beweglichen Körper (76, 76A, 76B, 76C, 76D), in dem eine Gewindeöffnung (76a), die in Schraubeingriff mit der Gewindewelle (74, 74A, 74B, 74C, 74D) ist, ausgebildet ist, und einen Aufnahmekörper (78, 78A, 78B, 78C, 78D), der die Gewindewelle (74, 74A, 74B, 74C, 74D) drehbar trägt, enthält, und
der Aufnahmekörper (78, 78A, 78B, 78C, 78D) an der Grundplatte (71) angeordnet ist, der Rahmen (2) an dem beweglichen Körper (76, 76A, 76B, 76C, 76D) angebracht ist und der bewegliche Körper (76, 76A, 76B, 76C, 76D) durch die Drehung der Gewindewelle (74, 74A, 74B, 74C, 74D) aufwärts und abwärts bewegt wird, wobei
das Presswerkzeug (82, 82A, 82C) einen Gewindewellenabschnitt (82a), der in Schraubeingriff mit den Gewindeöffnungen (76d) des beweglichen Körpers (76, 76A, 76B, 76C, 76D) ist, und einen Kontaktteil (82b), der an einem Ende des Gewindewellenabschnitts (82a) befestigt ist, enthält und
der Gewindewellenabschnitt (82a) derart eingeschraubt ist, dass der Kontaktteil (82b) gegen eine Seitenfläche der Grundplatte (71) gepresst wird.

2. Spritzgussmaschine, die Folgendes umfasst:
eine Niveaueinstelleinrichtung (70, 70A, 70B, 70C, 70D), die eine Höhe eines Rahmens (2) über einem Boden (1) einstellt,
wobei die Niveaueinstelleinrichtung (70, 70A, 70B, 70C, 70D) eine Grundplatte (71), die an dem Boden (1) installiert ist, und ein Tragwerkzeug (72, 72A, 72B, 72C, 72D), das den Rahmen (2) trägt, derart dass der Rahmen (2) relativ zu der Grundplatte (71) aufwärts und abwärts beweglich ist, enthält,
**dadurch gekennzeichnet, dass** die Niveaueinstelleinrichtung (70, 70A, 70B, 70C, 70D) ein Presswerkzeug (82, 82A, 82C) enthält, das die Grundplatte (71) und das Tragwerkzeug (72, 72A, 72B, 72C, 72D) in einer horizontalen Richtung presst, wobei
eine externe Kraft von dem Rahmen (2) auf das Tragwerkzeug (72, 72A, 72B, 72C, 72D) ausgeübt wird und eine Gegenkraft (C) von der Grundplatte (71) auf das Tragwerkzeug (72, 72A, 72B, 72C, 72D) ausgeübt wird,
das Tragwerkzeug (72, 72A, 72B, 72C, 72D) und die Grundplatte (71) Kontaktflächen (71Ba und 72Ba, 71Ca und 72Ca, 71Da und 72Da) enthalten, die bewirken, dass eine horizontale Komponente der Gegenkraft (C) erzeugt wird, und durch die horizontale Komponente in der horizontalen Richtung gepresst werden,
das Tragwerkzeug (72, 72A, 72B, 72C, 72D) eine Gewindewelle (74, 74A, 74B, 74C, 74D), einen beweglichen Körper (76, 76A, 76B, 76C, 76D), in dem eine Gewindeöffnung, die in Schraubeingriff mit der Gewindewelle (74, 74A, 74B, 74C, 74D) ist, ausgebildet ist, und einen Aufnahmekörper (78, 78A, 78B, 78C, 78D), der die Gewindewelle (74, 74A, 74B, 74C, 74D) drehbar trägt, enthält, und
der Aufnahmekörper (78, 78A, 78B, 78C, 78D) an der Grundplatte (71) angeordnet ist, der Rahmen (2) an dem beweglichen Körper (76, 76A, 76B, 76C, 76D) angebracht ist und der bewegliche Körper (76, 76A, 76B, 76C, 76D) durch die Drehung der Gewindewelle (74, 74A, 74B, 74C, 74D) aufwärts und abwärts bewegt wird.

3. Spritzgussmaschine nach Anspruch 1 oder 2, die ferner Folgendes umfasst:
mehrere Niveaueinstelleinrichtungen (70, 70A, 70B, 70C, 70D),
wobei die Richtung der horizontalen Komponente einer der Niveaueinstelleinrichtungen (70, 70A, 70B, 70C, 70D) und die Richtung der horizontalen Komponente der anderen Niveaueinstelleinrichtung (70, 70A, 70B, 70C, 70D) voneinander verschieden sind.

## Revendications

1. Machine de moulage par injection comprenant :
un ajusteur de niveau (70, 70A, 70B, 70C, 70D) qui ajuste une hauteur d'un châssis (2) par rapport à un sol (1),
dans lequel l'ajusteur de niveau (70, 70A, 70B, 70C, 70D) comprend une base (71) qui est installée sur le sol (1) et un outil de support (72, 72A, 72B, 72C, 72D) qui supporte le châssis (2) de sorte que le châssis (2) puisse se déplacer vers le haut et vers le bas par rapport à la base (71),
**caractérisée en ce que** l'ajusteur de niveau (70, 70A, 70B, 70C, 70D) comprend un outil de pressage (82, 82A, 82C) qui presse la base (71) et l'outil de support (72, 72A, 72B, 72C, 72D) dans une direction horizontale,
l'outil de support (72, 72A, 72B, 72C, 72D) comprend un arbre fileté (74, 74A, 74B, 74C, 74D), un corps mobile (76, 76A, 76B, 76C, 76D) dans lequel un orifice fileté (76a) engagé par filetage avec l'arbre fileté (74, 74A, 74B, 74C, 74D) est formé, et un corps de réception (78, 78A, 78B, 78C, 78D) qui supporte de manière rotative l'arbre fileté (74, 74A, 74B, 74C, 74D), et
le corps de réception (78, 78A, 78B, 78C, 78D) est placé sur la base (71), le châssis (2) est monté sur le corps mobile (76, 76A, 76B, 76C, 76D), et le corps mobile (76, 76A, 76B, 76C, 76D) est déplacé vers le haut et vers le bas par la rotation de l'arbre fileté (74, 74A, 74B, 74C, 74D),
l'outil de pressage (82, 82A, 82C) comprend une partie d'arbre fileté (82a) engagée par filetage avec les orifices filetés (76d) du corps mobile (76, 76A, 76B, 76C, 76D) et une partie de contact (82b) fixée sur une extrémité de la partie d'arbre fileté (82a), et
la partie d'arbre fileté (82a) est vissée à l'intérieur, de sorte que la partie de contact (82b) soit pressée contre une surface latérale de la base (71).

2. Machine de moulage par injection comprenant :
un ajusteur de niveau (70, 70A, 70B, 70C, 70D) qui ajuste une hauteur d'un châssis (2) par rapport à un sol (1),
dans lequel l'ajusteur de niveau (70, 70A, 70B, 70C, 70D) comprend une base (71) qui est installée sur le sol (1) et un outil de support (72, 72A, 72B, 72C, 72D) qui supporte le châssis (2) de sorte que le châssis (2) puisse se déplacer vers le haut et vers le bas par rapport à la base (71),
**caractérisée en ce que** l'ajusteur de niveau (70, 70A, 70B, 70C, 70D) comprend un outil de pressage (82, 82A, 82C) qui appuie contre la base (71) et l'outil de support (72, 72A, 72B, 72C, 72D) dans une direction horizontale,
une force externe est appliquée à l'outil de support (72, 72A, 72B, 72C, 72D) par le châssis (2) et une force de réaction (C) est appliquée à l'outil de support (72, 72A, 72B, 72C, 72D) par la base (71),
l'outil de support (72, 72A, 72B, 72C, 72D) et la base (71) comprennent des surfaces de contact (71Ba et 72Ba, 71Ca et 72Ca, 71Da et 72Da) qui provoquent la génération d'une composante horizontale de la force de réaction (C), et sont pressés dans la direction horizontale par la composante horizontale,
l'outil de support (72, 72A, 72B, 72C, 72D) comprend un arbre fileté (74, 74A, 74B, 74C, 74D), un corps mobile (76, 76A, 76B, 76C, 76D) dans lequel un orifice fileté engagé par filetage avec l'arbre fileté (74, 74A, 74B, 74C, 74D) est formé, et un corps de réception (78, 78A, 78B, 78C, 78D) qui supporte de manière rotative l'arbre fileté (74, 74A, 74B, 74C, 74D), et
le corps de réception (78, 78A, 78B, 78C, 78D) est placé sur la base (71), le châssis (2) est monté sur le corps mobile (76, 76A, 76B, 76C, 76D), et le corps mobile (76, 76A, 76B, 76C, 76D) est déplacé vers le haut et vers le bas par la rotation de l'arbre fileté (74, 74A, 74B, 74C, 74D).

3. Machine de moulage par injection selon la revendication 1 ou 2, comprenant en outre :
une pluralité d'ajusteurs de niveau (70, 70A, 70B, 70C, 70D),
dans lequel la direction de la composante horizontale de l'un des ajusteurs de niveau (70, 70A, 70B, 70C, 70D) et la direction de la composante horizontale de l'autre des ajusteurs de niveau (70, 70A, 70B, 70C, 70D) sont différentes l'une de l'autre.
